# EUROPEAN PATENT APPLICATION

(11) **EP 1 513 261 A1**
(43) Date of publication of application: **09.03.2005**
(21) Application number: 04025274.4
(22) Date of filing: 03.01.2002
(51) Int. Cl.: H04B 1/38, H01Q 1/24, H04B 7/08, G01S 5/14

(54) **Method and apparatus for use of GPS and cellular antenna combination**

(30) Priority: 08.02.2001 US 779937
(62) Divisional of application: 02703043.6
(71) Applicant: Ericsson Inc., Plano, TX 75024 (US)
(72) Inventor: Kim, Seung, Chapel Hill NC 27614 (US)
(74) Representative: Stavbom, Ellen

(57) **Abstract**

The invention discloses a method for improving the compatibility GPS receivers and cellular telephones, typically when both are found in the same unit. The invention solves the problem of the GPS receiver and the cellular telephone sharing the same antenna, and also discloses an embodiment wherein a second, diversity antenna is used for the GPS receiver. In both cases, switching circuitry is provided to switch disconnect the GPS receiver from the main antenna when the cellular telephone is transmitting.

## Description

### Field of the Invention

This invention is related to mobile telephones and, in particular, to mobile telephones equipped with the capability of determining their location using the Global Positioning Satellite (GPS) system.

### Background of the Invention

It is required for cellular telephone operation for a cellular phone to be aware of what cell it is located within. Cells in the cellular telephone system refer to the area covered by singular cellular tower, and can overlap. In general, a cellular phone will monitor the control channel of the cellular tower having the strongest signal. Therefore, a cellular phone has a rudimentary knowledge of its location.

However, there are applications, other than the normal voice communications capabilities of the cellular phone, that may require a more exact knowledge of the phone's location within a cell. These include, for example, an application providing location sensitive advertising over the cell phone, wherein targeted advertising could be sent to cell phone users within a certain proximity of the advertiser's location. Other such applications would be the provision of travel directions based on current location and enhanced 911 emergency services from calls made using a cellular phone.

Both the cellular voice communications and the GPS capabilities of a GPS-equipped cellular phone require an antenna. The cellular antenna is used to receive from and transmit to cells within the cellular network, typically located on the top of a tower. The GPS antenna receives signals from a plurality of GPS satellites. Ideally, both the cellular antenna and the GPS antenna are located on top of the unit. Further, the optimal spot for placement of the GPS antenna in the mobile unit is the same as for placement of the cellular antenna.

It is possible to use the same antenna for both cellular and GPS purposes. One problem with this arrangement is that a GPS antenna requires about 15db of isolation from the cellular antenna to work properly. Otherwise, the transmit power of the cellular phone will saturate the GPS receiver. It is also possible to use a filter, however, this is an undesirable option because of the insertion loss of the filter, its physical size and cost.

As a result of the difficulties in the uni-antenna design, the typical solution is to use a dual antenna configuration, having a separate antennae for the cellular and GPS applications. However, this solution also has problems. Unless the two antennae are isolated more than 15db, they interact each other. The circuit connected to one antenna can absorb the power coupled to it from an adjacent antenna, thereby reducing the efficiency of the adjacent antenna. If the circuit reflects rather than absorbs the coupled power, the radiation pattern for the adjacent antenna can be significantly distorted.

There is on-going effort in the antenna design field to provide sufficient isolation between two antennae. Currently the solution is to place the two antennae optimally on the unit, usually in an orthogonal configuration, to maximize the isolation between the antennae. However, given the shrinking size of the typical cellular telephone, achieving proper isolation is becoming increasingly difficult. Further, if the cellular antenna is placed in the optimal location on the unit (i.e., at the top), then it is necessary to place the GPS antenna at a less than ideal location (i.e., orthogonal the cellular antenna).

Therefore, it would be desirable to provide a solution that allows the optimal placement of both antennae while providing the necessary isolation.

One further problem is the typical GPS system does not work well in a city environment, euphemistically called the "urban canyon" environment, where it is possible that there is no primary direct GPS signal due to tall buildings etc., and wherein a reflected GPS signal may play a dominant role. In such a case, a primary antenna alone is not good enough to receive the required GPS signals.

Therefore, it would be desirable to solve the problems described above, while also providing assistance in the operation of the GPS in the "urban canyon" type environment.

### Summary of the Invention

The disclosed invention solves these problems for GSM (Global System for Mobile communications) or TDMA (Time Division Multiple Access) systems in a very practical way. In a first embodiment, a single quadruple band (800, 1500, 1800 & 1900 Mhz) antenna is used in conjunction with a control circuit providing time synchronized antenna switching. A second embodiment provides for the use of the quadruple band antenna as a cellular and primary GPS antenna and a second GPS antenna as a diversity antenna. Because the second GPS antenna is a diversity antenna, its location and performance is not critical. Therefore, it can be placed away from the primary antenna to provide the necessary isolation.

### Brief Description of the Drawings

Fig. 1 shows a prior art circuit in schematic form.
Fig. 2 shows a first embodiment of the invention in schematic form
Fig. 3a is a graph over time of the transmit function of the cellular transmitter/receiver of the circuit of Fig. 2.
Fig 3b is a graph over time of the switch position of the switch in the circuit of Fig. 2, correlated in time with Fig. 3a
Fig. 4 shows the preferred embodiment of the invention in schematic form.
Fig. 5 shows a timing diagram for the embodiment of Fig. 4

### Detailed Description of the Invention

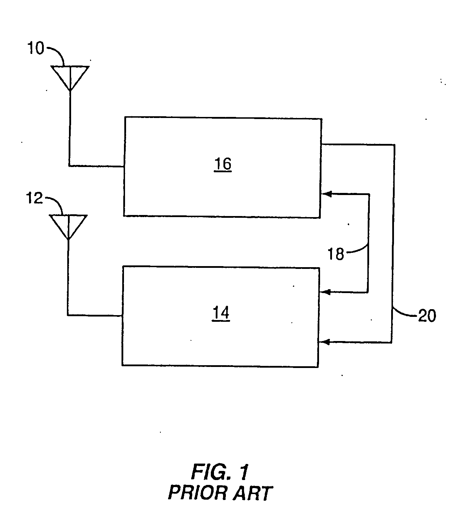

Fig. 1 shows the typical cellular phone and GPS antenna configuration of the prior art. The unit has two separate antennas. The first is a dual or triple band antenna 10 for sending and receiving of the cellular signals for cellular transceiver 16. The second is primary GPS antenna 12 for the reception of GPS satellite signals for GPS receiver 14. Line 18 is an RS-232 connection between cellular transceiver 16 and GPS receiver 14. Line 20 provides reference clock and time stamp signals. Isolation is supposed to be provided by the physical separation and orientation of antennae, however, this solution is not optimal.

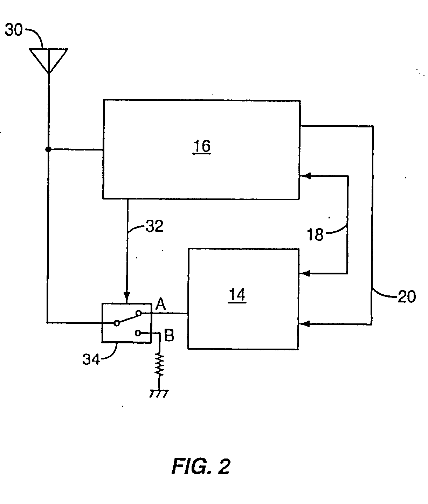

Fig. 2 shows a schematic of a first embodiment of the present invention. In this embodiment, GPS receiver 14 and cellular transceiver 16 share main triple band antenna 30. Because only one antenna is being used, only one output exists, so there is no antenna coupling, as may be experienced in the prior art two antenna case. The problem of saturation of GPS receiver 14 when the cellular phone is transmitting has been solved by the use of electronic switch 34, which is placed in the input path of GPS receiver 14. Switch 34 is controlled by the transmit control signal 32 of cellular transceiver 16. When cellular transceiver 16 transmits, switch 34 disconnects GPS receiver 14 from antenna 30, so the input to GPS receiver 14 is completely isolated from antenna 30.

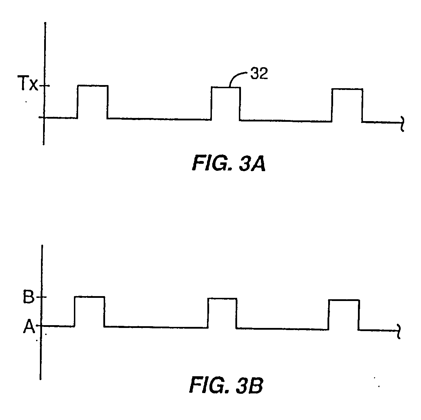

Figs. 3a and 3b show the correlation between the transmit control signal 32 and the position of switch 34. When cellular transceiver 16 is transmitting, transmit control signal 32 causes switch 34 to switch to the "B" position, whereby antenna 30 is connected to ground through an impedance matching circuit, such that a constant antenna load can be maintained. When there is no transmission, switch 34 is in the "A" position, and GPS receiver 14 is connected to antenna 30

TDMA cellular phones transmit for about 1/3 of the 20 ms cycle, or about 6.7 ms every 20 ms time slot (1 slot system). This means that the GPS input signal is blanked off about 6.7 ms of every 20 ms time slot. Tests have shown a 1db signal degradation in this case. For a 2 slot system, lab tests showed a 2db loss. 6.7 ms blanking is not problem when GPS receiver 14 is tracking, but it can cause a problem in finding a first fix when GPS receiver 14 is turned on or initialized. The correlaters of GPS receiver 14 initially do a fast search at 2 ms intervals. The absolute fast search time is dependent upon the GPS chip implementation, and is not an important issue with respect to this invention. If the first GPS satellite fast search is missed due to the 6.7 ms blanking signal, GPS receiver 14 switches to a longer search mode, which is a multiple of the 6 ms search. It takes a much longer time to fix the satellite position when the first, fast (short) search is missed. Thus, missing the first time fix due to 6.7 ms GPS signal blanking can be a problem. The proposed invention solves this problem by synchronizing the start of the fast search with transmit control signal 32. By starting the satellite fast search at the falling edge of transmit control signal 32 (right after the cellular phone transmission slot), GPS receiver 14 will not miss the first time satellite search. Transmit control signal 32 can serve as an interrupt signal to the search engine of GPS receiver 14 , as a search start signal. This solution results in an approximate 1db signal degradation and a slightly longer first-time-fix (about 1 sec. longer), due to the fact that the GPS signal is completely blanked out during the 6.7 ms transmit time slot.

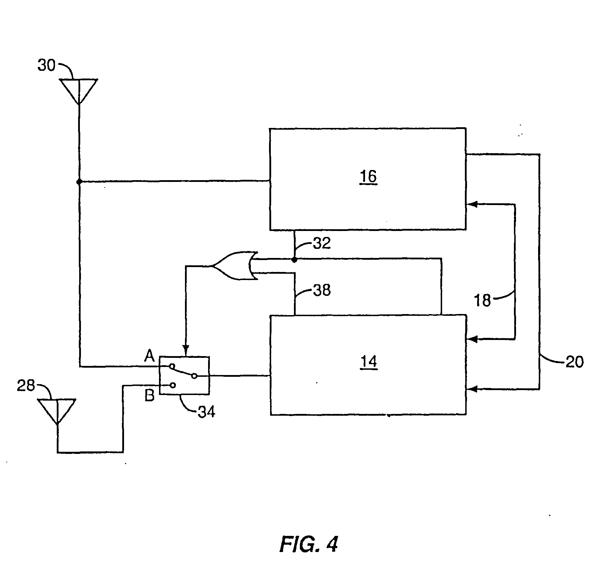

Fig. 4 shows a second, preferred embodiment of the invention. This embodiment requires the addition of GPS diversity antenna 28. Instead of switching off the input signal to GPS receiver 14 during the transmit time slot of cellular transceiver 16, the antenna input circuit of GPS receiver 14 is switched to diversity antenna 28. GPS diversity antenna 28 is not a primary antenna and not critical in this application, so it can be placed at the side, rear or bottom of the phone using a linear, slot or patch antenna.

The antenna switch 34 is controlled by both the transmit control signal 32, as in the first embodiment of the invention, and also by RSSI signal 38 (Received Signal Strength Indication) through an OR function. The GPS unit compares the GPS signal strength from both the main antenna and the diversity antenna, and uses the antenna with the strongest signal for the next GPS reading. Thus, the antenna input of GPS receiver 14 is switched to diversity antenna 28 whenever cellular transceiver 16 is transmitting and also when the received signal strength is greater on diversity antenna 28 than on main antenna 30 during the cellular receive time slot. The advantage of this approach is that the GPS signal is never completely cut off during the transmit time slot of cellular transceiver 16. The diversity antenna GPS signal may be weak, but GPS receiver 14 doesn't lose the GPS signal completely. Further, diversity antenna 28 may kick in and help under the "urban canyon" situation, where the signals from the GPS satellites may be reflected, causing the signal strength on the diversity antenna to be stronger than the signal strength on the main antenna. Further, its losses will be less than with the first embodiment, because the GPS signal is never cut off from the GPS receiver.

Note that the antenna switching occurs during a GPS measurement boundary, not in the middle measurement. First, GPS receiver 14 tracks the GPS satellites with main antenna 30 and measures the signal strength therefrom. The signal is then tracked with diversity antenna 28, based on satellite position data obtained through main antenna 30. Therefore, the second measurement of the signal strength will be faster. The two signal strength measurements will determine which antenna will be used for the next GPS measurement. The antenna with the higher signal strength measurement will be used next. If the first measurement through main antenna 30 fails, the next measurement will use diversity antenna 28.

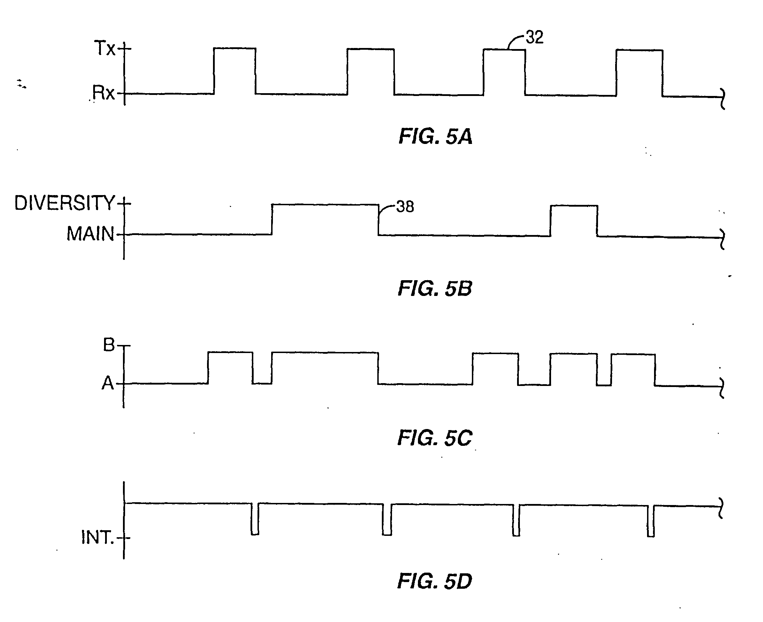

The timing of the preferred embodiment is shown in Figs. 5a-d. The transmit control signal is shown in Fig. 5a. As with the first embodiment, the antenna input to GPS receiver 14 is switched off of antenna 30 (position "A") and coupled to diversity antenna 28 (position "B"). Fig. 5d shows the interrupt for the start of the satellite search. Note that this signal is triggered on the falling edge of the transition from transmitting to not transmitting in Fig. 5a. This is to avoid the problem discussed earlier of the missed time to first fix satellite search. Shown in Fig. 5b, is the preferred antenna selection based on the RSSI signal level. It can be seen that, when the GPS signal from diversity antenna 28 is stronger than from main antenna 30, the switch position, shown in Fig 5c, switches to the "B" position (diversity antenna 28). Note that this is an idealization of the effect of RSSI signal 38 on the position of switch 34, subject to the previous discussion on the real time switching of the antennae. RSSI signal 38 switches at each GPS measurement boundary, not randomly during real time operation.

In both embodiments, all features of the invention can be implemented in either software or hardware, and may be built into any component of the unit, including the cellular transceiver, the GPS receiver, or the switch, or circuitry independent of all other components. The actual implementation is within the capabilities of anyone of ordinary skill in the art, and the scope of the invention is not meant to be limited to any particular implementation of the features disclosed.

## Claims

1. A method for improving the performance of a cellular telephone equipped with a GPS receiver (14) comprising the steps of:
providing a quadruple band antenna (30);
providing a diversity antenna (28) for said GPS receiver (14);
providing a controllable switch (34) capable of switching said GPS between said quadruple band antenna (30) and said diversity antenna (28); and
switching said GPS receiver (14) from said quadruple band antenna (30) to said diversity antenna (28) when said cellular telephone is transmitting.

2. The method of claim 1 wherein said switching step includes the steps of:
causing said cellular telephone to provide a signal to said GPS receiver (14) when said cellular telephone transceiver ceases transmitting; and
causing said GPS receiver (14) to delay searching for satellite signals until said signal is received.

3. The method of claim 1 further comprising the steps of:
monitoring the strength of GPS signals received on said quadruple band antenna (30) and on said diversity antenna (28); and
switching said GPS receiver (14) to the antenna with the stronger signal during the time said GPS receiver (14) is receiving.

4. The method of claim 3 wherein said switching step comprises the steps of:
providing a first signal when said cellular telephone is transmitting;
providing a second signal when said GPS receiver (14) receives a stronger signal from said diversity antenna (28); and
logically ORing said first and said second signals to determine when said GPS receiver should be switched to said diversity antenna (28).

5. The method of claim 4 further comprising the steps of:
causing said cellular telephone to provide a signal to said GPS receiver (14) when said cellular telephone transceiver (16) ceases transmitting; and
causing said GPS receiver (14) to delay searching for satellite signals until said signal is received.

6. A cellular telephone equipped with a GPS receiver (14) and a quadruple band antenna (30), said cellular telephone further comprising:
a switch (34); and
a diversity antenna (28), coupled to said GPS receiver (14) through said switch (34);
wherein said switch (34) switches said GPS receiver (14) from said quadruple band antenna (30) to said diversity antenna (28) when said cellular telephone is transmitting.

7. The cellular telephone of claim 6 wherein said switch (34) is controllable and further comprising:
circuitry for controlling said switch (34);
wherein said circuitry is coupled to said cellular telephone and further wherein said circuitry receives a signal from said cellular telephone when said cellular telephone is transmitting.

8. The cellular telephone of claim 7 wherein said GPS receiver (14) is coupled to said cellular telephone and further comprising means, in said GPS receiver (14), for delaying the start of a satellite search until the end of said period of transmission of said cellular telephone.

9. The cellular telephone of claim 8 further comprising:
circuitry, coupled to said GPS receiver (14), for comparing the strength of signals received from both said quadruple band antenna (30) and said diversity antenna (28);
wherein said circuitry for controlling said switch (34) causes said GPS receiver (14) to switch from said quadruple band antenna (30) to said diversity antenna (28) when said cellular telephone is transmitting or when said signal strength from said diversity antenna (28) is stronger than said signal strength from said quadruple band antenna (30).
